# FASCICULE DE BREVET EUROPEEN

(11) **EP 3 045 983 B1**
(45) Date de publication et mention de la délivrance du brevet: **26.06.2024**
(21) Numéro de dépôt: 16153674.3
(22) Date de dépôt: 04.07.2013
(51) Int. Cl.: G05B 15/02, E06B 9/68

(54) **PROCÉDÉ ET DISPOSITIF DE COMMANDE D'AU MOINS UN DISPOSITIF D'OCCULTATION D'AU MOINS UNE OUVERTURE D'UNE PIÈCE D'UN BÂTIMENT**
VERFAHREN UND VORRICHTUNG ZUR STEUERUNG MINDESTENS EINER VERDUNKELUNGSVORRICHTUNG FÜR MINDESTENS EIN ÖFFNUNGSELEMENT EINES GEBÄUDETEILS
METHOD AND DEVICE FOR CONTROLLING AT LEAST ONE DEVICE FOR CONCEALING AT LEAST ONE OPENING OF A ROOM IN A BUILDING

(30) Priorité: 06.07.2012 FR 1256499
(43) Date de publication de la demande: 20.07.2016
(62) Demande divisionnaire de: 13175157.0
(73) Titulaire: Delta Dore, 35270 Bonnemain (FR)
(72) Inventeur: LE, Duc Minh Khang, 35270 BONNEMAIN (FR); BOURDAIS, Romain, 35270 BONNEMAIN (FR); GUEGUEN, Hervé, 35270 BONNEMAIN (FR); PLEVIN, Jacques, 35270 BONNEMAIN (FR)
(74) Mandataire: Cabinet Le Guen Maillet

(56) Documents cités:
- WO-A1-92/00557
- US-A1- 2007 156 256

## Description

La présente invention concerne un procédé et dispositif de commande d'au moins un dispositif d'occultation d'au moins une ouverture d'une pièce d'un bâtiment.

Plus particulièrement, l'invention se situe dans le domaine de la gestion de la température d'une pièce d'un bâtiment en contrôlant un dispositif d'occultation d'au moins une ouverture.

L'apport énergétique du rayonnement solaire est un élément non négligeable dans une pièce. Celui-ci contribue à réduire les besoins en énergie fossile ou électrique nécessaires au chauffage de la pièce en période hivernale mais peut contribuer à augmenter les besoins en énergie fossile ou électrique nécessaires au rafraîchissement de la pièce en période estivale.

La demande de brevet US2011/066302 divulgue un système de commande de caractéristiques liées à l'énergie d'un bâtiment comprenant au moins un dispositif lié à l'énergie qui détermine une première condition liée à l'énergie et une seconde condition liée à l'énergie dans une zone intérieure spécifiée d'un bâtiment.

L'invention vise à optimiser l'apport énergétique du rayonnement solaire qui est un élément non négligeable dans une pièce de manière à garantir que les besoins en énergie fossile ou électrique nécessaires au chauffage de la pièce soient réduits.

L'invention concerne un procédé de commande d'au moins un volet roulant motorisé d'au moins une ouverture d'une pièce d'un bâtiment, le procédé comporte les étapes de :
- obtention d'un mode dans lequel se trouve un dispositif de commande de chauffage de la au moins une pièce, le mode dans lequel le dispositif de commande de chauffage de la au moins une pièce est un mode de contrôle de chauffage ou un mode inhibition du contrôle du chauffage,
- obtention de la valeur de la température dans la au moins une pièce,
- obtention de la valeur du rayonnement solaire,
- obtention d'une valeur d'au moins un paramètre à partir du mode dans lequel se trouve le dispositif de commande de chauffage de la au moins une pièce,
- décision d'une commande du volet roulant motorisé à partir de la valeur du au moins un paramètre obtenu,
- commande du volet roulant motorisé selon la décision,
caractérisé en ce que la décision de la commande du volet roulant motorisé est effectuée en comparant la valeur du rayonnement solaire à au moins une valeur de paramètre obtenue à partir du mode dans lequel se trouve le dispositif de commande de chauffage de la au moins une pièce, la au moins une valeur de paramètre obtenue à partir du mode dans lequel se trouve le dispositif de commande de chauffage de la au moins une pièce est en outre dépendante de la température de la au moins une pièce obtenue et de l'heure (107) à laquelle la température de la pièce du bâtiment et le rayonnement solaire sont obtenus, la au moins une valeur de paramètre obtenue à partir du mode dans lequel se trouve le dispositif de commande de chauffage est obtenue à partir de deux droites, chacune des droites ayant un coefficient directeur et une ordonnée à l'origine, sur l'axe des abscisses est représenté le temps, sur l'axe des ordonnées est représenté le rayonnement solaire mesuré par le capteur, le coefficient directeur et l'ordonnée à l'origine étant fonction du mode dans lequel le dispositif de commande de chauffage se trouve et d'un niveau de criticité représentatif de l'écart entre la température et un premier et second seuils, , le niveau de criticité pouvant être égal à un deux ou trois, les coefficients directeurs étant égaux à 0 si la valeur du niveau de criticité est égal à 1 ou 3 en mode inhibition du contrôle du chauffage, les coefficients directeurs étant égaux à 0 en mode contrôle du chauffage, les coefficients directeurs étant égaux à 10 si la valeur du niveau de criticité est égal à 2 en mode inhibition du contrôle du chauffage, l'ordonnée de la première droite affine est égale à 2000 si le niveau de criticité est égal à 1 en mode inhibition du contrôle du chauffage, l'ordonnée de la seconde droite affine est égale à 2000 si le niveau de criticité est égal à 1 en mode inhibition du contrôle du chauffage, l'ordonnée de la première droite affine est égale à 200 si le niveau de criticité est égal à 2 en mode inhibition du contrôle du chauffage, l'ordonnée de la seconde droite affine est égale à 400 si le niveau de criticité est égal à 2 en mode inhibition du contrôle du chauffage, l'ordonnée de la première droite affine est égale à 150 si le niveau de criticité est égal à 3 en mode inhibition du contrôle du chauffage, l'ordonnée de la seconde droite affine est égale à 150 si le niveau de criticité est égal à 3 en mode inhibition du contrôle du chauffage, l'ordonnée de la première droite affine est égale à 2000 si le niveau de criticité est égal à 1 en mode contrôle du chauffage, l'ordonnée de la seconde droite affine est égale à 2000 si le niveau de criticité est égal à 1 en mode contrôle du chauffage, l'ordonnée de la première droite affine est égale à 500 si le niveau de criticité est égal à 2 en mode contrôle du chauffage, l'ordonnée de la seconde droite affine est égale à 700 si le niveau de criticité est égal à 2 en mode contrôle du chauffage, l'ordonnée de la première droite affine est égale à 400 si le niveau de criticité est égal à 3 en mode contrôle du chauffage, l'ordonnée de la seconde droite affine est égale à 400 si le niveau de criticité est égal à 3 en mode contrôle du chauffage.

Corrélativement, l'invention concerne un dispositif de commande d'au moins un volet roulant motorisé d'au moins une ouverture d'une pièce d'un bâtiment, le dispositif de commande comporte :
- des moyens d'obtention d'un mode dans lequel se trouve un dispositif de commande de chauffage de la au moins une pièce,
- des moyens d'obtention de la valeur de la température dans la au moins une pièce,
- des moyens d'obtention de la valeur du rayonnement solaire,
   des moyens d'obtention d'une valeur d'au moins un paramètre à partir du mode dans lequel se trouve le dispositif de commande de chauffage de la au moins une pièce,
- des moyens de décision d'une commande du volet roulant motorisé à partir de la valeur du au moins un paramètre obtenue,
- des moyens de commande du volet roulant motorisé selon la décision,

caractérisé en ce que la décision de la commande du volet roulant motorisé est effectuée en comparant la valeur du rayonnement solaire à au moins une valeur de paramètre obtenue à partir du mode dans lequel se trouve le dispositif de commande de chauffage de la au moins une pièce, la au moins une valeur de paramètre obtenue à partir du mode dans lequel se trouve le dispositif de commande de chauffage de la au moins une pièce est en outre dépendante de la température de la au moins une pièce obtenue et de l'heure à laquelle la température de la pièce du bâtiment et le rayonnement solaire sont obtenus, la au moins une valeur de paramètre obtenue à partir du mode dans lequel se trouve le dispositif de commande de chauffage est obtenue à partir de deux droites, sur l'axe des abscisses est représenté le temps, sur l'axe des ordonnées est représenté le rayonnement solaire mesuré par le capteur, chacune des droites ayant un coefficient directeur et une ordonnée à l'origine, le coefficient directeur et l'ordonnée à l'origine étant fonction du mode dans lequel le dispositif de commande de chauffage se trouve et d'un niveau de criticité représentatif de l'écart entre la température et un premier et second seuils,
le niveau de criticité pouvant être égal à un deux ou trois, les coefficients directeurs étant égaux à 0 si la valeur du niveau de criticité est égal à 1 ou 3 en mode inhibition du contrôle du chauffage, les coefficients directeurs étant égaux à 0 en mode contrôle du chauffage, les coefficients directeurs étant égaux à 10 si la valeur du niveau de criticité est égal à 2 en mode inhibition du contrôle du chauffage, l'ordonnée de la première droite affine est égale à 2000 si le niveau de criticité est égal à 1 en mode inhibition du contrôle du chauffage, l'ordonnée de la seconde droite affine est égale à 2000 si le niveau de criticité est égal à 1 en mode inhibition du contrôle du chauffage, l'ordonnée de la première droite affine est égale à 200 si le niveau de criticité est égal à 2 en mode inhibition du contrôle du chauffage, l'ordonnée de la seconde droite affine est égale à 400 si le niveau de criticité est égal à 2 en mode inhibition du contrôle du chauffage, l'ordonnée de la première droite affine est égale à 150 si le niveau de criticité est égal à 3 en mode inhibition du contrôle du chauffage, l'ordonnée de la seconde droite affine est égale à 150 si le niveau de criticité est égal à 3 en mode inhibition du contrôle du chauffage, l'ordonnée de la première droite affine est égale à 2000 si le niveau de criticité est égal à 1 en mode contrôle du chauffage, l'ordonnée de la seconde droite affine est égale à 2000 si le niveau de criticité est égal à 1 en mode contrôle du chauffage, l'ordonnée de la première droite affine est égale à 500 si le niveau de criticité est égal à 2 en mode contrôle du chauffage, l'ordonnée de la seconde droite affine est égale à 700 si le niveau de criticité est égal à 2 en mode contrôle du chauffage, l'ordonnée de la première droite affine est égale à 400 si le niveau de criticité est égal à 3 en mode contrôle du chauffage, l'ordonnée de la seconde droite affine est égale à 400 si le niveau de criticité est égal à 3 en mode contrôle du chauffage.

Ainsi, en prenant en compte le mode dans lequel se trouve un dispositif de commande de chauffage de la au moins une pièce pour déterminer la valeur d'au moins un paramètre utilisé pour la prise de décision d'une commande du dispositif d'occultation, la présente invention permet d'ajuster la commande du dispositif d'occultation selon au moins un critère fiable.

En effet, le mode dans lequel se trouve un dispositif de commande de chauffage est particulièrement représentatif des conditions climatiques dans l'environnement du bâtiment. Il est aussi représentatif de la température dans la au moins une pièce et des souhaits des personnes résidant dans le bâtiment.

Le mode dans lequel le dispositif de commande de chauffage de la au moins une pièce est particulièrement représentatif des exigences des habitants du bâtiment. Il est aussi très bien adapté aux régions tempérées souvent soumises à des conditions climatiques inhabituelles au cours des saisons et fournit ainsi de meilleurs résultats que des méthodes qui seraient basées sur les saisons.

Ainsi, la présente invention permet de favoriser l'apport d'énergie lié au rayonnement solaire lorsque le dispositif de commande de chauffage de la au moins une pièce est dans le mode de contrôle de chauffage et permet de limiter l'apport d'énergie lié au rayonnement solaire lorsque le dispositif de commande de chauffage de la au moins une pièce est dans le mode inhibition du contrôle de chauffage.

Ainsi, la présente invention permet de contrôler l'apport d'énergie lié au rayonnement solaire en fonction de la température de la au moins une pièce et d'assurer ainsi un meilleur confort des personnes présentes dans la au moins une pièce.

Ainsi, la présente invention est adaptée aux variations journalières des conditions d'ensoleillement.

Selon un autre aspect de l'invention, lorsque le dispositif de commande de chauffage est dans le mode inhibition du contrôle du chauffage, le dispositif de commande d'au moins un dispositif d'occultation :
- obtient la température extérieure du bâtiment à une heure prédéterminée de la journée,
- compare la température extérieure du bâtiment obtenue avec un seuil de comparaison de température extérieure,
et le dispositif d' occultation est commandé pour prendre trois positions dont deux positions sont dépendantes de la comparaison de la température extérieure du bâtiment obtenue avec le seuil de comparaison de température extérieure.

Ainsi, la présente invention est simple à mettre en oeuvre et garantit que l'apport lié au rayonnement solaire est optimal tant sur le plan de la luminosité de la pièce que sur le plan énergétique.

Selon un autre aspect de l'invention, le procédé est exécuté itérativement, le dispositif d'occultation étant commandé pour prendre trois positions différentes et le procédé comporte en outre une étape d'annulation de la commande du dispositif d'occultation qui est dépendante de la position du dispositif d'occultation lors de la précédente itération et du mode dans lequel se trouve un dispositif de commande de chauffage de la au moins une pièce.

Ainsi, la présente invention permet de réaliser une temporisation sur l'ouverture ou la fermeture du dispositif d'occultation qui peut varier au cours du temps.

Selon un autre aspect de l'invention, si le mode dans lequel le dispositif de commande de chauffage de la au moins une pièce est le mode inhibition du contrôle du chauffage, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

Ainsi, la présente invention permet de réaliser une temporisation sur l'ouverture ou la fermeture du dispositif d'occultation qui peut varier au cours du temps et limiter les apports thermiques liés au rayonnement solaire.

Selon un autre aspect de l'invention, si le mode dans lequel le dispositif de commande de chauffage de la au moins une pièce est le mode de contrôle de chauffage, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

Ainsi, la présente invention permet de réaliser une temporisation sur l'ouverture ou la fermeture du dispositif d'occultation qui peut varier au cours du temps et favoriser les apports thermiques liés au rayonnement solaire ainsi que les apports en luminosité liés au rayonnement solaire.

Selon un autre aspect de l'invention, si le mode dans lequel le dispositif de commande de chauffage de la au moins une pièce est le mode de contrôle de chauffage, le procédé comporte en outre une étape de prise en compte de la température de
consigne de la au moins une pièce et de modification d'au moins un seuil de température.

Ainsi, il est possible de prendre en compte les préférences de chauffage de l'habitant de l'habitation.

Selon un autre aspect de l'invention, on compte le nombre d'ouvertures ou de fermetures journalier du dispositif d'occultation d'au moins une ouverture d'une pièce du bâtiment et on limite le nombre d'ouvertures ou de fermetures journalier du dispositif d'occultation.

Ainsi, la durée de vie des moteurs entraînant l'ouverture ou la fermeture du dispositif d'occultation d'au moins une ouverture d'une pièce du bâtiment est augmentée.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par au moins un système informatique.

Les avantages du système étant identiques à ceux précédemment mentionnés, ceux-ci ne seront pas rappelés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 représente un bâtiment dans lequel la présente invention est implémentée ;
- la Fig. 2 représente un schéma bloc d'un dispositif de commande d'au moins un dispositif d'occultation d'au moins une ouverture selon la présente invention ;
- la Fig. 3 représente un exemple de courbe de variation du rayonnement solaire sur une période de vingt-quatre heures ainsi que des droites permettant la décision de la commande d'au moins un dispositif d'occultation d'au moins une ouverture selon la présente invention ;
   décision de la commande d'au moins un dispositif d'occultation d'au moins une ouverture selon la présente invention ;
- la Fig. 4 représente un diagramme illustrant l'algorithme général exécuté par le dispositif de commande d'au moins un dispositif d'occultation d'au moins une ouverture selon la présente invention ;
- la Fig. 5 représente un diagramme illustrant l'algorithme exécuté par le dispositif de commande pour l'exécution de la fonction criticité selon la présente invention ;
- la Fig. 6a représente un diagramme illustrant l'algorithme exécuté par le dispositif de commande pour la détermination, lorsque le dispositif de commande de chauffage est en mode inhibition du contrôle du chauffage, de la fonction paramètre volet permettant la décision de la commande d'au moins un dispositif d'occultation d'au moins une ouverture selon la présente invention ;
- la Fig. 6b représente un diagramme illustrant l'algorithme exécuté par le dispositif de commande pour la détermination, lorsque le dispositif de commande de chauffage est en mode contrôle du chauffage, de la fonction paramètre volet permettant la décision de la commande d'au moins un dispositif d'occultation d'au moins une ouverture selon la présente invention ;
- la Fig. 7 représente un diagramme illustrant l'algorithme exécuté par le dispositif de commande pour la détermination d'un paramètre de décision de la commande d'au moins un dispositif d'occultation d'au moins une ouverture selon la présente invention ;
- la Fig. 8a représente un diagramme illustrant l'algorithme exécuté par le dispositif de commande pour la gestion, lorsque le dispositif de commande de chauffage est en mode contrôle du chauffage, d'une temporisation pour la commande d'au moins un dispositif d'occultation d'au moins une ouverture selon la présente invention ;
- la Fig. 8b représente un diagramme illustrant l'algorithme exécuté par le dispositif de commande pour la gestion, lorsque le dispositif de commande de chauffage est en mode inhibition du contrôle du chauffage, d'une temporisation pour la commande d'au moins un dispositif d'occultation d'au moins une ouverture selon la présente invention ;
- la Fig. 9 représente un diagramme illustrant l'algorithme exécuté par le dispositif de commande pour la détermination, lorsque le dispositif de commande de chauffage est en mode inhibition du contrôle du chauffage, de différentes positions d'au moins un dispositif d'occultation d'au moins une ouverture selon la présente invention ;
- la Fig. 10 représente un diagramme illustrant l'algorithme exécuté par le dispositif de commande pour la détermination d'un paramètre de commande d'au moins un dispositif d'occultation d'au moins une ouverture selon la présente invention.

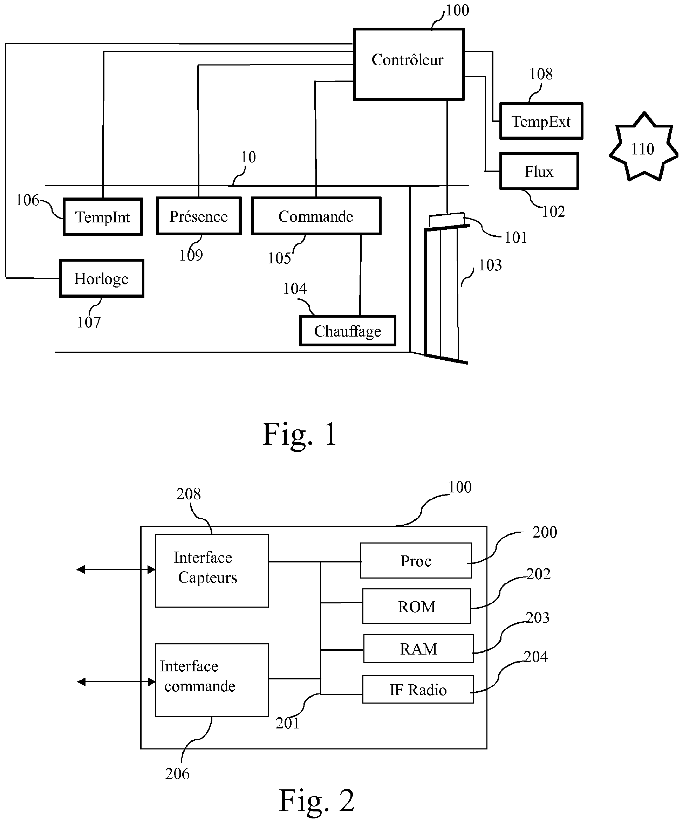

La Fig. 1 représente un bâtiment dans lequel la présente invention est implémentée.

Le bâtiment comporte au moins une pièce 10 disposant d'au moins une ouverture 103 orientée dans une direction telle que le rayonnement solaire contribue au chauffage de la pièce 10.

L'ouverture 103 peut être occultée par un dispositif d'occultation 101 tel que par exemple un volet roulant motorisé 101 ou un store motorisé.

L'ouverture 103 est dans un pignon du bâtiment par exemple et de manière non limitative orientée au sud, à l'est ou à l'ouest.

L'ouverture 103 peut aussi être une ouverture dans le toit du bâtiment par exemple et de manière non limitative orientée au sud, à l'est ou à l'ouest.

Selon la présente invention, un dispositif de commande 100, ou contrôleur, pilote le volet roulant 101.

Au contrôleur 100 sont reliés un capteur de rayonnement 102 du rayonnement du soleil 110, un capteur de température 108 placé à l'extérieur du bâtiment, un capteur de température 106 de la pièce 10 ou du bâtiment, une horloge 107, un dispositif de contrôle du chauffage 105 et éventuellement un capteur de présence 109.

L'horloge 107 est une horloge apte à fournir une information d'horodatage permettant de déterminer l'heure, le jour, et la saison selon un mode particulier de la présente invention.

Selon un autre mode particulier de la présente invention, la saison est déterminée à partir de la température mesurée par le capteur de température 108 à heure prédéterminée ou si l'horloge est une horloge astronomique à une heure correspondant au lever du soleil voire plus ou moins une heure.

L'heure prédéterminée à laquelle la température est mesurée par le capteur de température pour déterminer la saison est par exemple comprise entre 4 et 6 heures du matin, préférentiellement à 5 heures du matin.

Si la température mesurée par le capteur de température 108 à l'heure prédéterminée ou si l'horloge est une horloge astronomique à une heure correspondant au lever du soleil voire plus ou moins une heure est inférieure à 10 degrés, la saison est considérée être l'hiver.

Si la température mesurée par le capteur de température 108 à l'heure prédéterminée ou si l'horloge est une horloge astronomique à une heure correspondant au lever du soleil voire plus ou moins une heure est supérieure à 10 degrés et inférieure à 16 degrés, la saison est considérée être le printemps ou l'automne.

Si la température mesurée par le capteur de température 108 à l'heure prédéterminée ou si l'horloge est une horloge astronomique à une heure correspondant au lever du soleil voire plus ou moins une heure est supérieure à 16 degrés, la saison est considérée être l'été.

Selon un autre mode particulier de réalisation, le lever du jour est déterminé à partir du capteur de rayonnement 102. Lorsque la mesure du rayonnement solaire dépasse une valeur comprise entre 5 à 10/Wm², il est considéré que c'est le lever du jour.

Si la température mesurée par le capteur de température 108 est inférieure à 10 degrés lorsque la mesure du rayonnement solaire dépasse une valeur comprise entre 5 à 10/Wm², la saison est considérée être l'hiver.

Si la température mesurée par le capteur de température 108 est supérieure à 10 degrés et inférieure à 16 degrés lorsque la mesure du rayonnement solaire dépasse une valeur comprise entre 5 à 10/Wm², la saison est considérée être le printemps ou l'automne.

Si la température mesurée par le capteur de température 108 est supérieure à 16 degrés lorsque la mesure du rayonnement solaire dépasse une valeur comprise entre 5 à 10/Wm², la saison est considérée être l'été.

Bien entendu, les valeurs de 10 et/ou 16 degrés sont des modes préférés de réalisation de la présente invention et l'homme du métier comprendra aisément que ces valeurs de températures peuvent varier de plus ou moins deux degrés.

Un élément de chauffage 104 est situé dans la pièce 10 et permet de maintenir dans la pièce 10 une température de consigne, par exemple définie par l'occupant du bâtiment par l'intermédiaire du dispositif de contrôle du chauffage 105. L'élément de chauffage 104 est par exemple un radiateur électrique ou à eau chaude ou un chauffage au sol basse température.

Le dispositif de contrôle du chauffage 105 permet de définir différentes températures de consigne, telles que par exemple, une température de consigne lors d'absences longues de l'occupant, une température de consigne lors d'absences courtes de l'occupant et une température de consigne lorsque l'occupant est présent ou susceptible d'être présent dans le bâtiment ou la pièce 10.

Une absence longue est par exemple une absence de plus de vingt-quatre heures, une absence courte est par exemple une absence comprise entre deux et vingt-quatre heures.

Le dispositif de contrôle du chauffage 105 permet de définir les périodes d'absences longues, courtes et de présences sur un cycle hebdomadaire ou mensuel ou plus.

Lorsque le dispositif de contrôle du chauffage 105 est en mode contrôle du chauffage, le dispositif de contrôle du chauffage contrôle l'élément de chauffage 104, ou contrôle la chaudière alimentant l'élément de chauffage 104, en fonction de la température de la pièce et des différentes températures de consigne.

En mode contrôle du chauffage, le dispositif de contrôle du chauffage 105 génère des commandes visant à faire délivrer ou non de l'énergie thermique par l'élément de chauffage 104 pour réguler la température de la pièce.

Lorsque le dispositif de contrôle du chauffage 105 est en mode inhibition du contrôle du chauffage, la température de la pièce ou du bâtiment ne peut plus être augmentée par l'élément de chauffage.

Lorsque le dispositif de contrôle du chauffage 105 est en mode inhibition du contrôle du chauffage, aucune consigne n'est donnée à l'élément de chauffage 104 par le dispositif de contrôle du chauffage 105 et l'installation de chauffage est mise en arrêt.

Le mode inhibition du contrôle du chauffage est parfois appelé mode arrêt et est sélectionné ou désélectionné par l'habitant du logement. Il est à remarquer que le contrôleur 100, le dispositif de contrôle du chauffage 105, l'horloge 107, le capteur de température 106 peuvent être regroupés en un unique dispositif de commande et de programmation.

Selon la présente invention, le dispositif de commande comporte :
- des moyens d'obtention d'un mode dans lequel se trouve un dispositif de commande de chauffage de la au moins une pièce,
- des moyens d'obtention d'une valeur d'au moins un paramètre à partir du mode dans lequel se trouve le dispositif de commande de chauffage de la au moins une pièce,
- des moyens de décision d'une commande du dispositif d'occultation à partir de la valeur du au moins un paramètre obtenue,
- des moyens de commande du dispositif d'occultation selon la décision.

La Fig. 2 représente un schéma bloc d'un dispositif de pilotage d'au moins un dispositif d'occultation d'au moins une ouverture selon la présente invention.

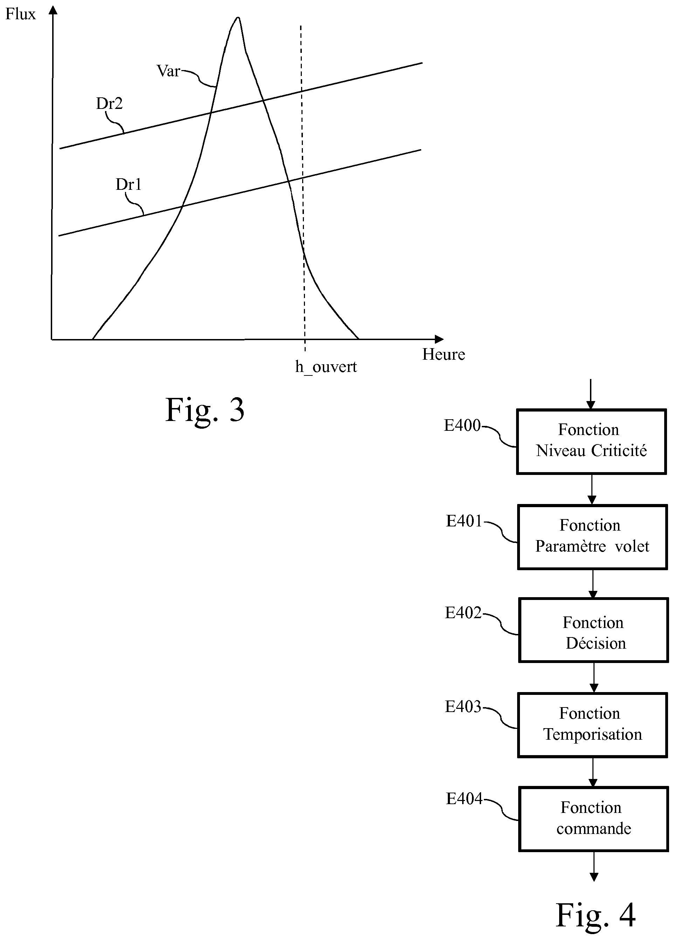

Le contrôleur 100 est adapté à effectuer, à partir d'un ou plusieurs modules logiciels, les étapes des algorithmes tels que décrits en référence aux Figs. 4 à 10.

Le contrôleur 100 comporte un bus de communication 201 auquel sont reliés un processeur 200, une mémoire non volatile 202, une mémoire vive 203, éventuellement une interface radio ou infrarouge 204 permettant la réception de codes issus d'une télécommande associée au contrôleur 100, une interface de commande 206 permettant la commande du dispositif d'occultation 101, et une interface capteurs 208 auxquels sont reliés les capteurs 102, 108, 106 et 109 ainsi que l'horloge 107 et le dispositif de programmation 105.

La mémoire non volatile 202 mémorise le ou les modules logiciel(s) mettant en oeuvre l'invention, ainsi que les données permettant de mettre en oeuvre les algorithmes tels que décrits en référence aux Figs. 4 à 10.

De manière plus générale, les programmes selon la présente invention sont mémorisés dans un moyen de stockage. Ce moyen de stockage est lisible par le microprocesseur 200. Ce moyen de stockage est intégré ou non au contrôleur 100, et peut être amovible.

Lors de la mise sous tension du contrôleur 100, le ou les modules logiciel(s) selon la présente invention est ou sont transféré(s) dans la mémoire vive 203 qui contient alors le code exécutable selon la présente invention ainsi que les données nécessaires à la mise en oeuvre de l'invention.

Il est à remarquer ici que le contrôleur 100 peut être constitué d'un ou plusieurs composant(s) électronique(s).

Par l'intermédiaire de l'interface capteurs 208, le processeur 200 obtient le mode de fonctionnement du dispositif de commande du chauffage 105, c'est-à-dire si le dispositif de commande du chauffage 05 est en mode contrôle du chauffage ou en mode inhibition du contrôle du chauffage.

La Fig. 3 représente un exemple de courbe de variation du rayonnement solaire sur une période de vingt-quatre heures ainsi que des droites permettant la décision de la commande d'au moins un dispositif d'occultation d'au moins une ouverture selon la présente invention.

Sur l'axe des abscisses est représenté le temps, sur l'axe des ordonnées est représenté le rayonnement solaire mesuré par le capteur 102.

La courbe Var représente les variations du rayonnement solaire mesuré par le capteur 102 sur une période de vingt-quatre heures.

La droite Dr1 est la représentation d'une fonction affine dont le coefficient directeur alpha1 et l'ordonnée à l'origine SF1 sont fonction du mode dans lequel le dispositif de commande de chauffage se trouve et d'un niveau de criticité.

La droite Dr2 est la représentation d'une fonction affine dont le coefficient directeur alpha2 et l'ordonnée à l'origine SF2 sont fonction du mode dans lequel le dispositif de commande de chauffage se trouve et du niveau de criticité.

Le niveau de criticité est représentatif de l'écart entre la température mesurée par le capteur 106 et un premier et un second seuils.

Le paramètre h_ouvert définit l'heure à partir de laquelle le dispositif d'occultation 101 laissera passer la totalité ou la quasi-totalité du rayonnement solaire à travers l'ouverture 103 si d'autres conditions, explicitées par la suite, sont remplies.

Lorsque le rayonnement solaire mesuré est, à un instant donné, supérieur à la valeur de rayonnement donnée par la courbe Dr2, le dispositif d'occultation 101 occulte totalement ou en quasi-totalité l'ouverture 103 si d'autres conditions, explicitées par la suite, sont remplies.

Une occultation totale ou en quasi-totalité correspond à une occultation de 75 à 100% de la surface de l'ouverture 103.

Lorsque le rayonnement solaire mesuré est, à un instant donné, inférieur à la valeur de rayonnement donnée par la courbe Dr1, le dispositif d'occultation 101laisse passer la totalité ou la quasi-totalité du rayonnement solaire à travers l'ouverture 103 si d'autres conditions, explicitées par la suite, sont remplies.

Le dispositif d'occultation 101laisse passer la totalité ou la quasi-totalité du rayonnement solaire à travers l'ouverture 103 lorsque le dispositif d'occultation 101 occulte moins de 10% de la surface de l'ouverture 103.

Lorsque le rayonnement solaire mesuré est, à un instant donné, inférieur à la valeur de rayonnement donnée par la courbe Dr2 et supérieur à la valeur de rayonnement donnée par la courbe Dr1, le dispositif d'occultation 101 laisse passer partiellement le rayonnement solaire à travers l'ouverture 103 si d'autres conditions, explicitées par la suite, sont remplies.

Le dispositif d'occultation 101laisse passer partiellement le rayonnement solaire à travers l'ouverture 103 lorsque le dispositif d'occultation 101 occulte entre 30 et 75% de la surface de l'ouverture 103.

La Fig. 4 représente un diagramme illustrant l'algorithme général exécuté par le dispositif de commande d'au moins un dispositif d'occultation d'au moins une ouverture selon la présente invention.

Le présent algorithme est plus précisément exécuté par le processeur 200 du contrôleur 100.

Le présent algorithme est exécuté périodiquement, par exemple toutes les dix minutes ou avec une périodicité comprise entre deux et quinze minutes. A chaque exécution du présent algorithme, le processeur 200 obtient les différentes valeurs mesurées par les capteurs 102, 106, 108, 109, l'horodatage fourni par l'horloge 107 ainsi qu'une information, fournie par le dispositif de programmation 105, indiquant si le dispositif de commande du chauffage 105 est en mode contrôle du chauffage ou en mode inhibition du contrôle du chauffage.

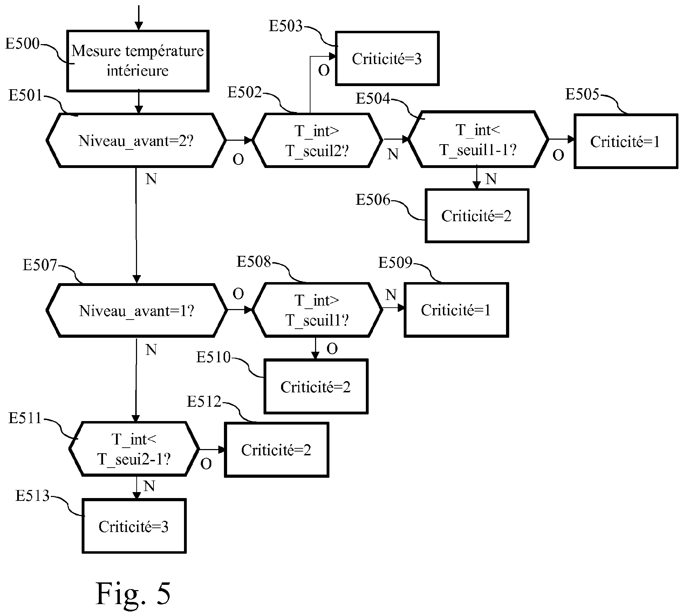

A l'étape E400, le processeur 200 lance l'exécution de la fonction niveau criticité qui sera décrite en détail en regard de la Fig. 5.

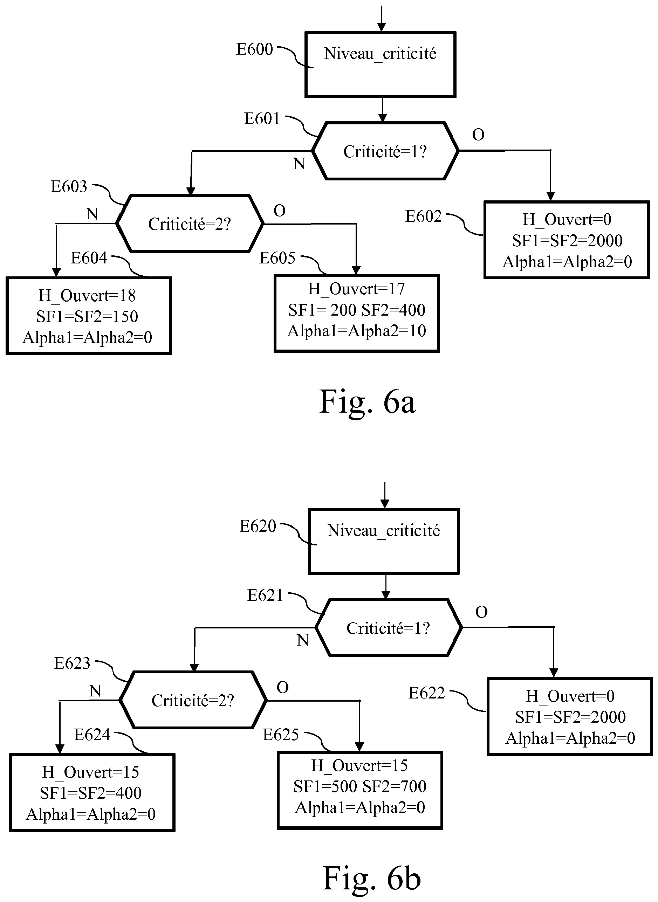

A l'étape suivante E401, le processeur 200 lance l'exécution de la fonction paramètre volet qui sera décrite en détail en regard de la Fig. 6a ou 6b.

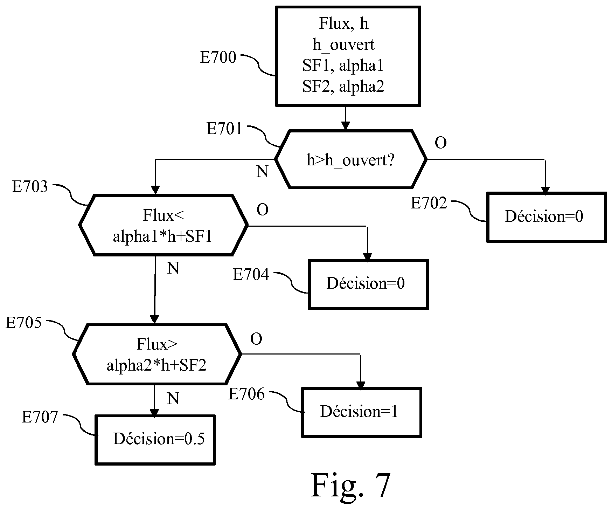

A l'étape suivante E402, le processeur 200 lance l'exécution de la fonction décision qui sera décrite en détail en regard de la Fig. 7.

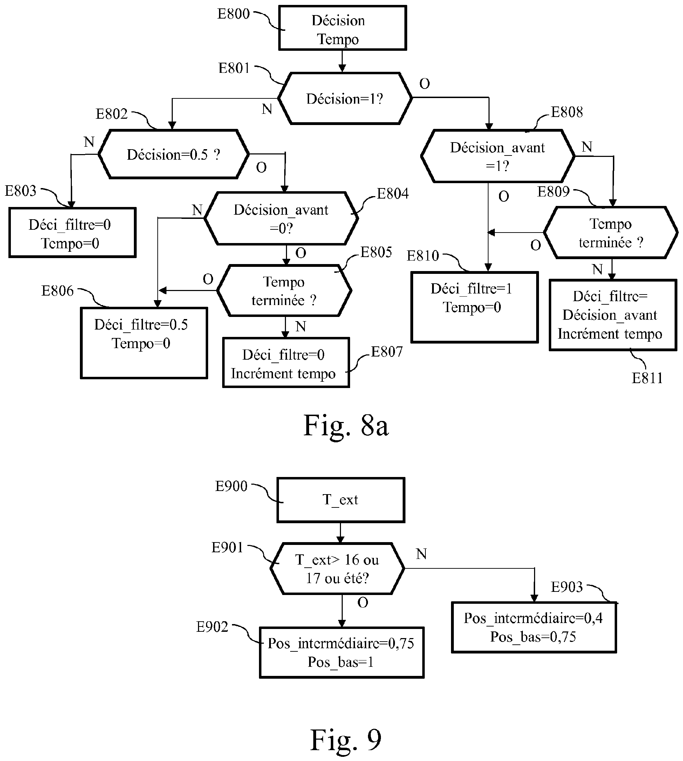

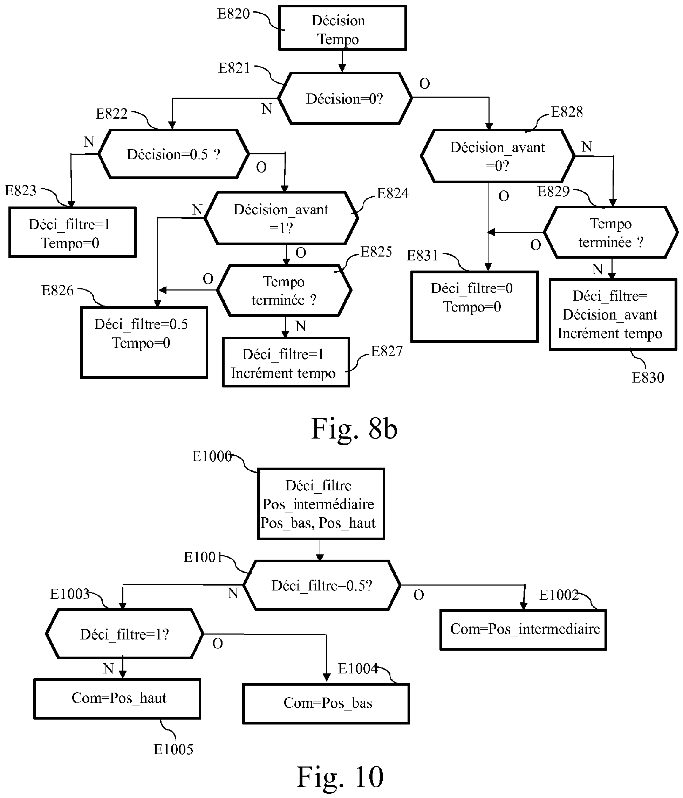

A l'étape suivante E403, le processeur 200 lance l'exécution de la fonction temporisation qui sera décrite en détail en regard de la Fig. 8a ou 8b.

A l'étape suivante E404, le processeur 200 lance l'exécution de la fonction commande qui sera décrite en détail en regard de la Fig. 10.

La Fig. 5 représente un diagramme illustrant l'algorithme exécuté par le dispositif de commande pour l'exécution de la fonction criticité selon la présente invention.

Le présent algorithme est plus précisément exécuté par le processeur 200 du contrôleur 100.

A l'étape E500, le processeur 200 obtient la valeur de la température intérieure T_int de la pièce 10 mesurée par le capteur 106.

A l'étape suivante E501, le processeur 200 vérifie si la valeur de la variable Niveau_avant est égale à deux.

A la première exécution du présent algorithme, la variable Niveau_avant est initialisée à la valeur deux, ensuite la variable Niveau avant est la valeur du niveau de criticité déterminée lors de la précédente exécution de la fonction criticité.

Si la valeur de la variable Niveau_avant est égale à deux, le processeur 200 passe à l'étape E502.

Si la valeur de la variable Niveau_avant est différente de deux, le processeur 200 passe à l'étape E507.

A l'étape E502, le processeur 200 vérifie si la température intérieure T_int de la pièce 10 mesurée à l'étape E500 est supérieure à un seuil prédéterminé T_seuil2.

Le seuil prédéterminé T_seuil2 dépend du mode dans lequel le dispositif de contrôle du chauffage 105 est. Par exemple, le seuil prédéterminé T_seuil2 est égal à 24 degrés lorsque le dispositif de commande 105 est en mode contrôle du chauffage 105 et est égal à 23 degrés lorsque le dispositif de contrôle du chauffage 105 est en mode inhibition du contrôle de chauffage.

Dans un mode particulier de réalisation de la présente invention, la valeur du seuil T_seuil2 peut être augmentée ou diminuée d'un ou plusieurs degrés par l'interface homme machine du dispositif de contrôle du chauffage par exemple dans une plage comprise entre +/- 5 degrés.

Si la température intérieure T_int est supérieure au seuil prédéterminé T_seuil2, le processeur 200 passe à l'étape E503. Dans la négative, le processeur 200 passe à l'étape E504.

A l'étape E503, le processeur 200 met le niveau de criticité Niveau_criticité à la valeur trois et termine la fonction criticité.

A l'étape E504, le processeur 200 vérifie si la température intérieure T_int de la pièce 10 mesurée à l'étape E500 est inférieure à un seuil prédéterminé T_seuil1 minoré de un.

Le seuil prédéterminé T_seuil1 dépend du mode dans lequel le dispositif de contrôle du chauffage 105 est.

Par exemple, le seuil prédéterminé T_seuil1 est égal à 22 degrés en période lorsque le dispositif de commande 105 est en mode contrôle du chauffage 105et est égal à 23 degrés en période lorsque le dispositif de contrôle du chauffage 105 est en mode inhibition du contrôle de chauffage.

Dans un mode particulier de réalisation de la présente invention, la valeur du seuil T_seuil1 peut être augmentée ou diminuée d'un ou plusieurs degrés par l'interface homme machine du dispositif de contrôle du chauffage par exemple dans une plage comprise entre +/- 5 degrés.

Si la température intérieure T_int est inférieure au seuil prédéterminé T_seuil1 minoré de un, le processeur 200 passe à l'étape E505. Dans la négative, le processeur 200 passe à l'étape E506.

A l'étape E505, le processeur 200 met le niveau de criticité Niveau_criticité à la valeur un et termine la fonction criticité.

A l'étape E506, le processeur 200 met le niveau de criticité Niveau_criticité à la valeur deux et termine la fonction criticité.

A l'étape E507, le processeur 200 vérifie si la valeur de la variable Niveau_avant est égale à un.

Si la valeur de la variable Niveau_avant est égale à un, le processeur 200 passe à l'étape E508.

Si la valeur de la variable Niveau_avant est différente de un, le processeur 200 passe à l'étape E511.

A l'étape E508, le processeur 200 vérifie si la température intérieure T_int est inférieure au seuil prédéterminé T_seuil1.

Selon un mode particulier de réalisation de la présente invention, le seuil de 22 degrés est modifiable par l'interface homme machine par exemple dans une plage comprise entre +/- 5 degrés. Il est à remarquer ici que préférentiellement, les seuils T_seuil1 et T_seuil2 sont augmentés de la même manière par une même opération effectuée par l'interface homme machine du dispositif de contrôle du chauffage.

Si la température intérieure T_int est inférieure au seuil prédéterminé T_seuil1, le processeur 200 passe à l'étape E509. Dans la négative, le processeur 200 passe à l'étape E510.

A l'étape E509, le processeur 200 met le niveau de criticité Niveau_criticité à la valeur un et termine la fonction criticité.

A l'étape E510, le processeur 200 met le niveau de criticité Niveau_criticité à la valeur deux et termine la fonction criticité.

A l'étape E511, le processeur 200 vérifie si la température intérieure T_int est inférieure au seuil prédéterminé T_seuil2 minoré de un.

Si la température intérieure T_int est inférieure au seuil prédéterminé T_seuil2 minoré de un, le processeur 200 passe à l'étape E512. Dans la négative, le processeur 200 passe à l'étape E513.

A l'étape E512, le processeur 200 met le niveau de criticité Niveau_criticité à la valeur deux et termine la fonction criticité.

A l'étape E510, le processeur 200 met le niveau de criticité Niveau_criticité à la valeur trois et termine la fonction criticité.

La **Fig. 6a** représente un diagramme illustrant l'algorithme exécuté par le dispositif de commande pour la détermination, lorsque le dispositif de contrôle du chauffage 105 est en mode inhibition du contrôle de chauffage, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E600, le processeur 200 obtient le niveau de criticité Niveau_criticité déterminé lors de l'exécution de l'algorithme de la Fig. 5.

A l'étape suivante E601, le processeur 200 vérifie si le niveau de criticité Niveau_criticité est égal à un.

Si le niveau de criticité Niveau _criticité est égal à un, le processeur 200 passe à l'étape E602. Dans la négative, le processeur 200 passe à l'étape E603.

A l'étape E602, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E603, le processeur 200 vérifie si le niveau de criticité Niveau_criticité est égal à deux.

Si le niveau de criticité Niveau _criticité est égal à deux, le processeur 200 passe à l'étape E605. Dans la négative, le processeur 200 passe à l'étape E604.

A l'étape E604, le processeur 200 met le paramètre h_ouvert à 18 heures, le coefficient directeur alpha1 à la valeur nulle, le coefficient directeur alpha2 à la valeur nulle, l'ordonnée à l'origine SF1 à la valeur 150, l'ordonnée à l'origine SF2 à la valeur 150 et termine la fonction paramètre volet.

A l'étape E605, le processeur 200 met le paramètre h_ouvert à 17 heures, le coefficient directeur alpha1 à la valeur 10,le coefficient directeur alpha2 à la valeur 10, l'ordonnée à l'origine SF1 à la valeur 200, l'ordonnée à l'origine SF2 à la valeur 400 et termine la fonction paramètre volet.

La **Fig. 6b** représente un diagramme illustrant l'algorithme exécuté par le dispositif de commande pour la détermination, lorsque le dispositif de contrôle du chauffage 105 est en mode contrôle de chauffage, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E620, le processeur 200 obtient le niveau de criticité Niveau_criticité déterminé lors de l'exécution de l'algorithme de la Fig. 5.

A l'étape suivante E621, le processeur 200 vérifie si le niveau de criticité Niveau_criticité est égal à un.

Si le niveau de criticité Niveau _criticité est égal à un, le processeur 200 passe à l'étape E622. Dans la négative, le processeur 200 passe à l'étape E623.

A l'étape E622, le processeur 200 met le paramètre h ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E623, le processeur 200 vérifie si le niveau de criticité Niveau_criticité est égal à deux.

Si le niveau de criticité Niveau _criticité est égal à deux, le processeur 200 passe à l'étape E625. Dans la négative, le processeur 200 passe à l'étape E624.

A l'étape E624, le processeur 200 met le paramètre h_ouvert à 15 heures, le coefficient directeur alpha1 à la valeur nulle, le coefficient directeur alpha2 à la valeur nulle, l'ordonnée à l'origine SF1 à la valeur 400, l'ordonnée à l'origine SF2 à la valeur 400 et termine la fonction paramètre volet.

A l'étape E625, le processeur 200 met le paramètre h_ouvert à 15 heures, le coefficient directeur alpha1 à la valeur nulle, le coefficient directeur alpha2 à la valeur nulle, l'ordonnée à l'origine SF1 à la valeur 500, l'ordonnée à l'origine SF2 à la valeur 700 et termine la fonction paramètre volet.

Les paramètres déterminés par la fonction paramètre volet sont, comme cela a été décrit en référence aux Figs. 6a et 6b, dépendants du mode dans lequel se trouve le dispositif de contrôle du chauffage 105 au moment où les mesures ont été effectuées.

La Fig. 7 représente un diagramme illustrant l'algorithme exécuté par le dispositif de commande pour la détermination d'un paramètre de décision de la commande d'au moins un dispositif d'occultation d'au moins une ouverture selon la présente invention.

Le présent algorithme est plus précisément exécuté par le processeur 200 du contrôleur 100.

A l'étape E700, le processeur 200 obtient la valeur mesurée par le capteur de rayonnement102, l'heure fournie par l'horloge 107 et les valeurs des variables SF1, SF2, alpha1, alpha2 et h_ouvert déterminées lors de la précédente exécution de la fonction paramètre volet décrite en référence à la Fig. 6a ou 6b.

A l'étape E701, le processeur 200 vérifie si l'heure fournie par l'horloge 107 est supérieure à la valeur de la variable h_ouvert.

Si l'heure fournie par l'horloge 107 est supérieure à la valeur de la variable h_ouvert, le processeur 200 passe à l'étape E702. Dans la négative, le processeur 200 passe à l'étape E703.

A l'étape E702, le processeur 200 met la variable Décision à la valeur nulle et termine la fonction paramètre de décision.

Lorsque la variable Décision est à la valeur nulle, le dispositif d'occultation 101 laisse passer la totalité ou la quasi-totalité du rayonnement solaire à travers l'ouverture 103 si d'autres conditions, explicitées par la suite, sont remplies.

Lorsque le rayonnement solaire mesuré est, à un instant donné, inférieur à la valeur de rayonnement donnée par la courbe Dr1, le dispositif d'occultation 101 laisse passer la totalité ou la quasi-totalité du rayonnement solaire à travers l'ouverture 103 si d'autres conditions, explicitées par la suite, sont remplies.

A l'étape E703, le processeur 200 vérifie si la valeur Flux du rayonnement mesuré par le capteur de rayonnement102 est inférieure à la droite Dr1.

Si la valeur Flux mesurée par le capteur de rayonnement 102 est inférieure à la droite Dr1, le processeur 200 passe à l'étape E704. Dans la négative, le processeur 200 passe à l'étape E705.

A l'étape E704, le processeur 200 met la variable Décision à la valeur nulle et termine la fonction paramètre de décision.

A l'étape E703, le processeur 200 vérifie si la valeur Flux mesurée par le capteur de rayonnement 102 est supérieure à la droite Dr2.

Si la valeur Flux mesurée par le capteur de rayonnement 102 est supérieure à la droite Dr2, le processeur 200 passe à l'étape E706. Dans la négative, le processeur 200 passe à l'étape E707.

A l'étape E706, le processeur 200 met la variable Décision à la valeur un et termine la fonction paramètre de décision.

Lorsque la variable Décision est à la valeur un, le dispositif d'occultation 101 occulte totalement ou en quasi-totalité l'ouverture 103 si d'autres conditions, explicitées par la suite, sont remplies.

A l'étape E707, le processeur 200 met la variable Décision à la valeur un demi et termine la fonction paramètre de décision.

Lorsque la variable Décision est à la valeur un demi, le dispositif d'occultation 101laisse passer partiellement le rayonnement solaire à travers l'ouverture 103.

Le paramètre Décision est, comme cela a été décrit en référence aux Figs. 6a et 6b, dépendant du mode dans lequel se trouve le dispositif de contrôle du chauffage 105 au moment où la mesure de la valeur Flux du rayonnement a été effectuée ainsi que de la température intérieure T_int.

La Fig. 8a représente un diagramme illustrant l'algorithme exécuté par le dispositif de commande pour la gestion, lorsque le dispositif de contrôle du chauffage 105 est en mode contrôle de chauffage, d'une fonction pour la commande d'au moins un dispositif d'occultation d'au moins une ouverture selon la présente invention.

Le présent algorithme est plus précisément exécuté par le processeur 200 du contrôleur 100.

A l'étape E800, le processeur 200 obtient la valeur de la variable décision déterminée par l'algorithme de la Fig. 7, la valeur du compteur journalier d'actionnement du dispositif d'occultation, ainsi que la valeur d'un seuil d'une temporisation qui est par exemple égale à 30 minutes ou comprise entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermée.

A l'étape suivante E801, le processeur 200 vérifie si la variable Décision est égale à un.

Si la variable Décision est égale à un, le processeur 200 passe à l'étape E808. Dans la négative, le processeur 200 passe à l'étape E802.

A l'étape E802, le processeur 200 vérifie si la variable Décision est égale à un demi.

Si la variable Décision est égale à un demi, le processeur 200 passe à l'étape E804. Dans la négative, le processeur 200 passe à l'étape E803.

A l'étape E803, le processeur 200 met la variable Déci_filtre à la valeur nulle, met la variable Tempo à la valeur nulle et termine la fonction temporisation.

Lorsque la variable Déci_filtre est à la valeur nulle, le dispositif d'occultation 101laisse passer la totalité du rayonnement solaire à travers l'ouverture 103 si d'autres conditions, explicitées par la suite, sont remplies.

A l'étape E804, le processeur 200 vérifie si la variable Décision_avant est nulle.

La variable Décision avant est la valeur déterminée par l'algorithme de la Fig. 7 lors de la précédente exécution de l'algorithme de la Fig. 4.

Si la variable Décision_avant est nulle, le processeur 200 passe à l'étape E805. Dans la négative, le processeur 200 passe à l'étape E806.

A l'étape E805, le processeur 200 vérifie si la valeur de la variable Tempo est supérieure ou égale au seuil d'une temporisation.

Dans un mode particulier de réalisation de la présente invention, le processeur 200 vérifie en outre à l'étape E805 si la valeur d'un compteur journalier d'actionnement du dispositif d'occultation est supérieure à la valeur trois. Si la valeur d'un compteur journalier est supérieure à trois, le processeur 200 passe à l'étape E807. Si la valeur du compteur journalier est inférieure ou égale à trois et si la valeur de la variable Tempo est supérieure ou égale au seuil d'une temporisation, le processeur 200 passe à l'étape E806.

Si la valeur de la variable Tempo est supérieure ou égale au seuil d'une temporisation, le processeur 200 passe à l'étape E806. Dans la négative, le processeur 200 passe à l'étape E807.

A l'étape E806, le processeur 200 met la variable Déci_filtre à la valeur un demi, met la variable Tempo à la valeur nulle et termine la fonction temporisation.

Lorsque la variable Déci_filtre est à la valeur un demi, le dispositif d'occultation 101laisse passer une partie du rayonnement solaire à travers l'ouverture 103 si d'autres conditions, explicitées par la suite, sont remplies.

A l'étape E807, le processeur 200 met la variable Déci_filtre à la valeur nulle, incrémente la variable Tempo à la valeur correspondant à la périodicité d'exécution de l'algorithme de la Fig. 4et termine la fonction temporisation.

A l'étape E808, le processeur 200 vérifie si la variable Décision_avant est égale à un.

Si la variable Décision_avant est égale à un, le processeur 200 passe à l'étape E810. Dans la négative, le processeur 200 passe à l'étape E809.

A l'étape E809, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E810. Dans la négative, le processeur 200 passe à l'étape E811.

Dans un mode particulier de réalisation de la présente invention, le processeur 200 vérifie en outre à l'étape E809 si la valeur d'un compteur journalier d'actionnement du dispositif d'occultation est supérieure à la valeur trois. Si la valeur d'un compteur journalier est supérieure à trois, le processeur 200 passe à l'étape E811. Si la valeur du compteur journalier est inférieure ou égale à trois et si la valeur de la variable Tempo est supérieure ou égale au seuil d'une temporisation, le processeur 200 passe à l'étape E810.

A l'étape E810, le processeur 200 met la variable Déci_filtre à la valeur un, met la variable Tempo à la valeur nulle et termine la fonction temporisation.

Lorsque la variable Déci_filtre est à la valeur un, le dispositif d'occultation 101laisse passer une partie ou ne laisse pas passer le rayonnement solaire à travers l'ouverture 103 si d'autres conditions, explicitées par la suite, sont remplies.

A l'étape E811, le processeur 200 met la variable Déci_filtre à la valeur de la variable Décision_avant, incrémente la variable Tempo à la valeur correspondant à la périodicité d'exécution de l'algorithme de la Fig. 4 et termine la fonction temporisation.

Comme cela a été décrit en référence à la Fig. 8a, si la température de la pièce du bâtiment et la valeur du rayonnement solaire sont obtenues lorsque le dispositif de contrôle du chauffage 105 est en mode contrôle de chauffage, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

La **Fig. 8b** représente un diagramme illustrant l'algorithme exécuté par le dispositif de commande pour la gestion, en période lorsque le dispositif de contrôle du chauffage 105 est en mode inhibition du contrôle de chauffage, d'une temporisation pour la commande d'au moins un dispositif d'occultation d'au moins une ouverture selon la présente invention.

Le présent algorithme est plus précisément exécuté par le processeur 200 du contrôleur 100.

A l'étape E820, le processeur obtient la valeur de la variable décision déterminée par l'algorithme de la Fig. 7 ainsi que la valeur d'un seuil d'une temporisation qui est par exemple égale à 30 minutes ou comprise entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou à la position ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermée.

A l'étape suivante E821, le processeur 200 vérifie si la variable Décision est nulle.

Si la variable Décision est nulle, le processeur 200 passe à l'étape E828. Dans la négative, le processeur 200 passe à l'étape E822.

A l'étape E822, le processeur 200 vérifie si la variable Décision est égale à un demi.

Si la variable Décision est égale à un demi, le processeur 200 passe à l'étape E824. Dans la négative, le processeur 200 passe à l'étape E823.

A l'étape E823, le processeur 200 met la variable Déci_filtre à la valeur un, met la variable Tempo à la valeur nulle et termine la fonction temporisation.

A l'étape E824, le processeur 200 vérifie si la variable Décision_avant est égale à un.

Si la variable Décision_avant est nulle, le processeur 200 passe à l'étape E825. Dans la négative, le processeur 200 passe à l'étape E826.

A l'étape E825, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E826. Dans la négative, le processeur 200 passe à l'étape E827.

Dans un mode particulier de réalisation de la présente invention, le processeur 200 vérifie en outre à l'étape E825 si la valeur d'un compteur journalier d'actionnement du dispositif d'occultation est supérieure à la valeur trois. Si la valeur d'un compteur journalier est supérieure à trois, le processeur 200 passe à l'étape E827. Si la valeur du compteur journalier est inférieure ou égale à trois et si la valeur de la variable Tempo est supérieure ou égale au seuil d'une temporisation, le processeur 200 passe à l'étape E826.

A l'étape E826, le processeur 200 met la variable Déci_filtre à la valeur un demi, met la variable Tempo à la valeur nulle et termine la fonction temporisation.

A l'étape E827, le processeur 200 met la variable Déci_filtre à la valeur un, incrémente la variable Tempo à la valeur correspondant à la périodicité d'exécution de l'algorithme de la Fig. 4et termine la fonction temporisation.

Lorsque la variable Déci_filtre est à la valeur un, le dispositif d'occultation 101laisse passer une partie ou ne laisse pas passer le rayonnement solaire à travers l'ouverture 103 si d'autres conditions, explicitées par la suite, sont remplies.

A l'étape E828, le processeur 200 vérifie si la variable Décision_avant est nulle.

Si la variable Décision avant est nulle, le processeur 200 passe à l'étape E831. Dans la négative, le processeur 200 passe à l'étape E829.

A l'étape E829, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E831. Dans la négative, le processeur 200 passe à l'étape E830.

Dans un mode particulier de réalisation de la présente invention, le processeur 200 vérifie en outre à l'étape E829 si la valeur d'un compteur journalier d'actionnement du dispositif d'occultation est supérieure à la valeur trois. Si la valeur d'un compteur journalier est supérieure à trois, le processeur 200 passe à l'étape E831. Si la valeur du compteur journalier est inférieure ou égale à trois et si la valeur de la variable Tempo est supérieure ou égale au seuil d'une temporisation, le processeur 200 passe à l'étape E830.

A l'étape E831, le processeur 200 met la variable Déci_filtre à la valeur nulle, met la variable Tempo à la valeur nulle et termine la fonction temporisation.

A l'étape E830, le processeur 200 met la variable Déci_filtre à la valeur de la variable Décision_avant, incrémente la variable Tempo à la valeur correspondant à la périodicité d'exécution de l'algorithme de la Fig. 4et termine la fonction temporisation.

Comme cela a été décrit en référence à la Fig. 8b, si la température de la pièce du bâtiment et la valeur du rayonnement solaire sont obtenues lorsque le dispositif de contrôle du chauffage 105 est en mode inhibition du contrôle de chauffage, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

La **Fig. 9** représente un diagramme illustrant l'algorithme exécuté par le dispositif de commande pour la détermination, lorsque le dispositif de contrôle du chauffage 105 est en mode inhibition du contrôle de chauffage, de différentes positions d'au moins un dispositif d'occultation d'au moins une ouverture selon la présente invention.

Le présent algorithme est plus précisément exécuté par le processeur 200 du contrôleur 100 tous les jours lorsque le dispositif de contrôle du chauffage 105 est en mode inhibition du contrôle de chauffage entre 3H30mn et 4H30mn du matin ou au lever du jour.

Le lever du jour est par exemple détecté par le capteur de rayonnement 102 lorsque celui-ci mesure un rayonnement supérieur à une valeur comprise entre 5 à 10 W/m². Le capteur de rayonnement 102, lorsque la mesure du rayonnement dépasse la valeur comprise entre 5 à 10W/m2, notifie le contrôleur 100 du lever du jour ou le contrôleur 100, en prenant périodiquement la valeur mesurée par le capteur de rayonnement, détecte le lever du jour lorsque la valeur mesurée par le capteur de rayonnement dépasse la valeur comprise entre 5 à 10W/m2.

A l'étape E900, le processeur 200 obtient du capteur 108, la température extérieure T_ext.

A l'étape suivante E901, le processeur 200 vérifie si la température extérieure T_ext est supérieure à 17 degrés.

Si la température extérieure T_ext est supérieure à 17 degrés ou 16 degrés selon un mode particulier de réalisation, le processeur 200 passe à l'étape E902. Dans la négative, le processeur 200 passe à l'étape E903.

Dans un autre mode de réalisation, le processeur 200, au lieu de vérifier si la température extérieure T_ext est supérieure à 17 degrés, vérifie si la saison déterminée par la mesure de la température au lever du soleil est l'été.

Si la saison est l'été, le processeur 200 passe à l'étape E902. Dans la négative, le processeur 200 passe à l'étape E903.

A l'étape E902, le processeur 200 met la variable position intermédiaire Pos_intermédiaire à la valeur 0,75 et la variable position bas Pos_bas à la valeur 1et termine l'algorithme de la Fig. 9.

Lorsque la variable Pos_bas est à la valeur un, le dispositif d'occultation 101 occulte totalement ou en quasi-totalité l'ouverture 103 si d'autres conditions, explicitées par la suite, sont remplies.

Lorsque la variable Pos_intermédiaire est à la valeur 0,75, le dispositif d'occultation 10locculte 75% de la surface de l'ouverture 103.

A l'étape E903, le processeur 200 met la variable position intermédiaire Pos_intermédiaire à la valeur 0,4 et la variable position bas Pos_bas à la valeur 0.75et termine l'algorithme de la Fig. 9.

Lorsque la variable Pos_bas est à la valeur 0.4, le dispositif d'occultation 101occulte 40% de la surface de l'ouverture 103.

La position Pos_haut correspondant à la configuration dans laquelle le dispositif d'occultation 101laisse passer la totalité ou la quasi-totalité du rayonnement solaire à travers l'ouverture 103 si d'autres conditions, explicitées par la suite, sont remplies.

La **Fig. 10** représente un diagramme illustrant l'algorithme exécuté par le dispositif de commande pour la détermination d'un paramètre de commande d'au moins un dispositif d'occultation d'au moins une ouverture selon la présente invention.

Le présent algorithme est plus précisément exécuté par le processeur 200 du contrôleur 100.

A l'étape E1000, le processeur 200 obtient la valeur de la variable Déci_filtre déterminée par la fonction décrite en référence à la Fig. 8a ou 8b et les valeurs des variables Pos_haut, Pos_intermédiaire et Pos_bas déterminées par la fonction décrite en référence à la Fig. 9.

A l'étape E1001, le processeur 200 vérifie si la valeur de la variable Déci_filtre est égale à un demi.

Si la valeur de la variable Déci_filtre est égale à un demi, le processeur 200 passe à l'étape E1002. Dans la négative, le processeur 200 passe à l'étape 1001.

A l'étape E1002, le processeur 200 met la variable Com à la valeur de la variable Pos_Intermédiaire et commande le dispositif d'occultation pour que celui-ci se place à la position correspondante et interrompt l'exécution de l'algorithme.

A l'étape E1003, le processeur 200 vérifie si la valeur de la variable Déci_filtre est égale à un.

Si la valeur de la variable Déci_filtre est égale à un, le processeur 200 passe à l'étape E1004. Dans la négative, le processeur 200 passe à l'étape 1005.

A l'étape E1004, le processeur 200 met la variable Com à la valeur de la variable Pos_bas et commande le dispositif d'occultation pour que celui-ci se place à la position correspondante et interrompt l'exécution de l'algorithme.

A l'étape E1005, le processeur 200 met la variable Com à la valeur de la variable Pos_haut et commande le dispositif d'occultation pour que celui-ci laisse passer la totalité du rayonnement solaire à travers l'ouverture.

Lorsque la variable Com est égale à Pos_bas, le dispositif d'occultation 101 ne laisse pas le rayonnement solaire à travers l'ouverture. Bien entendu, la présente invention n'est nullement limitée aux modes de réalisation décrits ici, mais englobe, bien au contraire, toute variante à la portée de l'homme du métier, contenues dans la portée des revendications ci-dessous.

## Revendications

1. Procédé de commande d'au moins un volet roulant motorisé (101) d'au moins une ouverture d'une pièce (10) d'un bâtiment, le procédé comporte les étapes de :
- obtention d'un mode dans lequel se trouve un dispositif de commande de chauffage (105) de la au moins une pièce, le mode dans lequel le dispositif de commande de chauffage (105) de la au moins une pièce (10) est un mode de contrôle de chauffage ou un mode inhibition du contrôle du chauffage,
- obtention de la valeur de la température (106) dans la au moins une pièce,
- obtention de la valeur du rayonnement solaire,
- obtention d'une valeur d'au moins un paramètre à partir du mode dans lequel se trouve le dispositif de commande de chauffage de la au moins une pièce,
- décision d'une commande du volet roulant motorisé (101) à partir de la valeur du au moins un paramètre obtenu,
- commande du volet roulant motorisé selon la décision,
**caractérisé en ce que** la décision de la commande du volet roulant motorisé est effectuée en comparant la valeur du rayonnement solaire à au moins une valeur de paramètre obtenue à partir du mode dans lequel se trouve le dispositif de commande de chauffage de la au moins une pièce, la au moins une valeur de paramètre obtenue à partir du mode dans lequel se trouve le dispositif de commande de chauffage de la au moins une pièce est en outre dépendante de la température de la au moins une pièce obtenue et de l'heure (107) à laquelle la température de la pièce du bâtiment et le rayonnement solaire sont obtenus, la au moins une valeur de paramètre obtenue à partir du mode dans lequel se trouve le dispositif de commande de chauffage est obtenue à partir de deux droites, chacune des droites ayant un coefficient directeur et une ordonnée à l'origine, sur l'axe des abscisses est représenté le temps, sur l'axe des ordonnées est représenté le rayonnement solaire mesuré par le capteur, le coefficient directeur et l'ordonnée à l'origine étant fonction du mode dans lequel le dispositif de commande de chauffage se trouve et d'un niveau de criticité représentatif de l'écart entre la température et un premier et second seuils, le niveau de criticité pouvant être égal à un, deux ou trois, les coefficients directeurs étant égaux à 0 si la valeur du niveau de criticité est égal à 1 ou 3 en mode inhibition du contrôle du chauffage, les coefficients directeurs étant égaux à 0 en mode contrôle du chauffage, les coefficients directeurs étant égaux à 10 si la valeur du niveau de criticité est égal à 2 en mode inhibition du contrôle du chauffage, l'ordonnée de la première droite affine est égale à 2000 si le niveau de criticité est égal à 1 en mode inhibition du contrôle du chauffage, l'ordonnée de la seconde droite affine est égale à 2000 si le niveau de criticité est égal à 1 en mode inhibition du contrôle du chauffage, l'ordonnée de la première droite affine est égale à 200 si le niveau de criticité est égal à 2 en mode inhibition du contrôle du chauffage, l'ordonnée de la seconde droite affine est égale à 400 si le niveau de criticité est égal à 2 en mode inhibition du contrôle du chauffage, l'ordonnée de la première droite affine est égale à 150 si le niveau de criticité est égal à 3 en mode inhibition du contrôle du chauffage, l'ordonnée de la seconde droite affine est égale à 150 si le niveau de criticité est égal à 3 en mode inhibition du contrôle du chauffage, l'ordonnée de la première droite affine est égale à 2000 si le niveau de criticité est égal à 1 en mode contrôle du chauffage, l'ordonnée de la seconde droite affine est égale à 2000 si le niveau de criticité est égal à 1 en mode contrôle du chauffage, l'ordonnée de la première droite affine est égale à 500 si le niveau de criticité est égal à 2 en mode contrôle du chauffage, l'ordonnée de la seconde droite affine est égale à 700 si le niveau de criticité est égal à 2 en mode contrôle du chauffage, l'ordonnée de la première droite affine est égale à 400 si le niveau de criticité est égal à 3 en mode contrôle du chauffage, l'ordonnée de la seconde droite affine est égale à 400 si le niveau de criticité est égal à 3 en mode contrôle du chauffage.

2. Procédé selon la revendication 1, **caractérisé en ce que** le procédé comporte en outre les étapes, exécutées lorsque le dispositif de commande de chauffage est dans le mode inhibition du contrôle du chauffage de :
- obtention de la température extérieure (108) du bâtiment à une heure prédéterminée de la journée,
- comparaison de la température extérieure du bâtiment obtenue avec un seuil de comparaison de température extérieure,
et **en ce que** le volet roulant motorisé est commandé pour prendre trois positions dont deux positions sont dépendantes de la comparaison de la température extérieure du bâtiment obtenue avec le seuil de comparaison de température extérieure.

3. Procédé selon l'une quelconque des revendications 1 à 2, **caractérisé en ce que** le procédé est exécuté itérativement, le volet roulant motorisé étant commandé pour prendre trois positions différentes et **en ce que** le procédé comporte en outre une étape d'annulation de la commande du volet roulant motorisé qui est dépendante de la position du volet roulant motorisé lors de la précédente itération et du mode dans lequel se trouve un dispositif de commande de chauffage de la au moins une pièce.

4. Procédé selon la revendication 3, **caractérisé en ce que**, si le mode dans lequel le dispositif de commande de chauffage de la au moins une pièce est le mode inhibition du contrôle du chauffage, la commande du volet roulant motorisé est annulée pendant une période donnée si le volet roulant motorisé est, à l'itération précédente, dans une position permettant une quantité moins importante de rayonnement solaire de traverser l'ouverture que celle permise par la position du volet roulant motorisé dont la commande est annulée.

5. Procédé selon la revendication 3 ou 4, **caractérisé en ce que**, si le mode dans lequel le dispositif de commande de chauffage de la au moins une pièce est le mode de contrôle de chauffage, la commande du volet roulant motorisé est annulée pendant une période donnée si le volet roulant motorisé est, à l'itération précédente, dans une position permettant une quantité plus importante de rayonnement solaire de traverser l'ouverture que celle permise par la position du volet roulant motorisé dont la commande est annulée.

6. Procédé selon l'une quelconque des revendications 1 à 5, **caractérisé en ce que** si le mode dans lequel le dispositif de commande de chauffage de la au moins une pièce est le mode de contrôle de chauffage, le procédé comporte en outre une étape de prise en compte de la température de consigne de la au moins une pièce et de modification d'au moins un seuil de température.

7. Procédé selon l'une quelconque des revendications 1 à 6, **caractérisé en ce que** le procédé comporte en outre une étape de comptage du nombre d'ouvertures ou de fermetures journalier du volet roulant motorisé d'au moins une ouverture d'une pièce du bâtiment et de limitation du nombre d'ouvertures ou de fermetures journalier du volet roulant motorisé.

8. Dispositif de commande (100) d'au moins un volet roulant motorisé (103) d'au moins une ouverture (103) d'une pièce (10) d'un bâtiment, le dispositif de commande comporte :
- des moyens d'obtention d'un mode dans lequel se trouve un dispositif de commande de chauffage (105) de la au moins une pièce,
- des moyens d'obtention de la valeur de la température (106) dans la au moins une pièce,
- des moyens d'obtention de la valeur du rayonnement solaire,
des moyens d'obtention d'une valeur d'au moins un paramètre à partir du mode dans lequel se trouve le dispositif de commande de chauffage (105) de la au moins une pièce,
- des moyens de décision d'une commande du volet roulant motorisé (101) à partir de la valeur du au moins un paramètre obtenue,
- des moyens de commande du volet roulant motorisé selon la décision,
**caractérisé en ce que** le moyen de décision est configuré tel que la décision de la commande du volet roulant motorisé est effectuée en comparant la valeur du rayonnement solaire à au moins une valeur de paramètre obtenue à partir du mode dans lequel se trouve le dispositif de commande de chauffage de la au moins une pièce, la au moins une valeur de paramètre obtenue à partir du mode dans lequel se trouve le dispositif de commande de chauffage de la au moins une pièce est en outre dépendante de la température de la au moins une pièce obtenue et de l'heure (107) à laquelle la température de la pièce du bâtiment et le rayonnement solaire sont obtenus, la au moins une valeur de paramètre obtenue à partir du mode dans lequel se trouve le dispositif de commande de chauffage est obtenue à partir de deux droites, sur l'axe des abscisses est représenté le temps, sur l'axe des ordonnées est représenté le rayonnement solaire mesuré par le capteur, chacune des droites ayant un coefficient directeur et une ordonnée à l'origine, le coefficient directeur et l'ordonnée à l'origine étant fonction du mode dans lequel le dispositif de commande de chauffage se trouve et d'un niveau de criticité représentatif de l'écart entre la température et un premier et second seuils,
le niveau de criticité pouvant être égal à un, deux ou trois, les coefficients directeurs étant égaux à 0 si la valeur du niveau de criticité est égal à 1 ou 3 en mode inhibition du contrôle du chauffage, les coefficients directeurs étant égaux à 0 en mode contrôle du chauffage, les coefficients directeurs étant égaux à 10 si la valeur du niveau de criticité est égal à 2 en mode inhibition du contrôle du chauffage, l'ordonnée de la première droite affine est égale à 2000 si le niveau de criticité est égal à 1 en mode inhibition du contrôle du chauffage, l'ordonnée de la seconde droite affine est égale à 2000 si le niveau de criticité est égal à 1 en mode inhibition du contrôle du chauffage, l'ordonnée de la première droite affine est égale à 200 si le niveau de criticité est égal à 2 en mode inhibition du contrôle du chauffage, l'ordonnée de la seconde droite affine est égale à 400 si le niveau de criticité est égal à 2 en mode inhibition du contrôle du chauffage, l'ordonnée de la première droite affine est égale à 150 si le niveau de criticité est égal à 3 en mode inhibition du contrôle du chauffage, l'ordonnée de la seconde droite affine est égale à 150 si le niveau de criticité est égal à 3 en mode inhibition du contrôle du chauffage, l'ordonnée de la première droite affine est égale à 2000 si le niveau de criticité est égal à 1 en mode contrôle du chauffage, l'ordonnée de la seconde droite affine est égale à 2000 si le niveau de criticité est égal à 1 en mode contrôle du chauffage, l'ordonnée de la première droite affine est égale à 500 si le niveau de criticité est égal à 2 en mode contrôle du chauffage, l'ordonnée de la seconde droite affine est égale à 700 si le niveau de criticité est égal à 2 en mode contrôle du chauffage, l'ordonnée de la première droite affine est égale à 400 si le niveau de criticité est égal à 3 en mode contrôle du chauffage, l'ordonnée de la seconde droite affine est égale à 400 si le niveau de criticité est égal à 3 en mode contrôle du chauffage.

## Patentansprüche

1. Verfahren zur Ansteuerung mindestens eines motorisierten Rollladens (101) mindestens einer Öffnung eines Raumes (10) eines Gebäudes, wobei das Verfahren die folgenden Schritte umfasst:
- Feststellen eines Modus, in dem sich eine Heizungsansteuerungsvorrichtung (105) des mindestens einen Raumes befindet, wobei der Modus, in dem sich die Heizungsansteuerungsvorrichtung (105) des mindestens einen Raumes (10) befindet, ein Modus zur Heizungssteuerung oder ein Modus zur Unterdrückung der Heizungssteuerung ist,
- Feststellen des Werts der Temperatur (106) in dem mindestens einen Raum,
- Feststellen des Werts der Sonneneinstrahlung,
- Feststellen eines Werts mindestens eines Parameters anhand des Modus, in dem sich die Heizungsansteuerungsvorrichtung des mindestens einen Raumes befindet,
- Treffen einer Entscheidung über eine Ansteuerung des motorisierten Rollladens (101) anhand des Werts des mindestens einen festgestellten Parameters,
- Ansteuern des motorisierten Rollladens gemäß der Entscheidung,
**dadurch gekennzeichnet, dass** die Entscheidung über die Ansteuerung des motorisierten Rollladens dadurch erfolgt, dass der Wert der Sonneneinstrahlung mit mindestens einem Parameterwert, der anhand des Modus, in dem sich die Heizungsansteuerungsvorrichtung des mindestens einen Raumes befindet, festgestellt wird, verglichen wird, wobei der mindestens eine Parameterwert, der anhand des Modus, in dem sich die Heizungsansteuerungsvorrichtung des mindestens einen Raumes befindet, festgestellt wird, ferner von der festgestellten Temperatur des mindestens einen Raumes und von der Uhrzeit (107), zu der die Temperatur des Raumes des Gebäudes und die Sonneneinstrahlung festgestellt werden, abhängt, wobei der mindestens eine Parameterwert, der anhand des Modus, in dem sich die Heizungsansteuerungsvorrichtung befindet, festgestellt wird, anhand von zwei Geraden festgestellt wird, wobei jede der Geraden eine Steigung und eine Ordinate im Ursprung aufweist, wobei auf der Abszissenachse die Zeit dargestellt ist und auf der Ordinatenachse die durch den Sensor gemessene Sonneneinstrahlung dargestellt ist, wobei die Steigung und die Ordinate im Ursprung von dem Modus, in dem sich die Heizungsansteuerungsvorrichtung befindet, und von einer Kritikalitätsstufe, die für die Abweichung zwischen der Temperatur und einer ersten und einer zweiten Schwelle repräsentativ ist, abhängen, wobei die Kritikalitätsstufe eins, zwei oder drei betragen kann, wobei die Steigungen gleich 0 sind, wenn der Wert der Kritikalitätsstufe im Modus zur Unterdrückung der Heizungssteuerung gleich 1 oder 3 ist, wobei die Steigungen im Modus zur Heizungssteuerung gleich 0 sind, wobei die Steigungen gleich 10 sind, wenn der Wert der Kritikalitätsstufe im Modus zur Unterdrückung der Heizungssteuerung gleich 2 ist, wobei die Ordinate der ersten affinen Geraden gleich 2000 ist, wenn die Kritikalitätsstufe im Modus zur Unterdrückung der Heizungssteuerung gleich 1 ist, wobei die Ordinate der zweiten affinen Geraden gleich 2000 ist, wenn die Kritikalitätsstufe im Modus zur Unterdrückung der Heizungssteuerung gleich 1 ist, wobei die Ordinate der ersten affinen Geraden gleich 200 ist, wenn die Kritikalitätsstufe im Modus zur Unterdrückung der Heizungssteuerung gleich 2 ist, wobei die Ordinate der zweiten affinen Geraden gleich 400 ist, wenn die Kritikalitätsstufe im Modus zur Unterdrückung der Heizungssteuerung gleich 2 ist, wobei die Ordinate der ersten affinen Geraden gleich 150 ist, wenn die Kritikalitätsstufe im Modus zur Unterdrückung der Heizungssteuerung gleich 3 ist, wobei die Ordinate der zweiten affinen Geraden gleich 150 ist, wenn die Kritikalitätsstufe im Modus zur Unterdrückung der Heizungssteuerung gleich 3 ist, wobei die Ordinate der ersten affinen Geraden gleich 2000 ist, wenn die Kritikalitätsstufe im Modus zur Heizungssteuerung gleich 1 ist, wobei die Ordinate der zweiten affinen Geraden gleich 2000 ist, wenn die Kritikalitätsstufe im Modus zur Heizungssteuerung gleich 1 ist, wobei die Ordinate der ersten affinen Geraden gleich 500 ist, wenn die Kritikalitätsstufe im Modus zur Heizungssteuerung gleich 2 ist, wobei die Ordinate der zweiten affinen Geraden gleich 700 ist, wenn die Kritikalitätsstufe im Modus zur Heizungssteuerung gleich 2 ist, wobei die Ordinate der ersten affinen Geraden gleich 400 ist, wenn die Kritikalitätsstufe im Modus zur Heizungssteuerung gleich 3 ist, wobei die Ordinate der zweiten affinen Geraden gleich 400 ist, wenn die Kritikalitätsstufe im Modus zur Heizungssteuerung gleich 3 ist.

2. Verfahren nach Anspruch 1, **dadurch gekennzeichnet, dass** das Verfahren ferner die folgenden Schritte umfasst, die ausgeführt werden, wenn sich die Heizungsansteuerungsvorrichtung in dem Modus zur Unterdrückung der Heizungssteuerung befindet:
- Feststellen der Außentemperatur (108) des Gebäudes zu einer vorbestimmten Uhrzeit des Tages,
- Vergleichen der festgestellten Außentemperatur des Gebäudes mit einer Außentemperatur-Vergleichsschwelle, und dass der motorisierte Rollladen so angesteuert wird, dass er drei Positionen einnehmen kann, von denen zwei Positionen von dem Vergleich der festgestellten Außentemperatur des Gebäudes mit der Außentemperatur-Vergleichsschwelle abhängen.

3. Verfahren nach einem beliebigen der Ansprüche 1 bis 2, **dadurch gekennzeichnet, dass** das Verfahren iterativ ausgeführt wird, wobei der motorisierte Rollladen so angesteuert wird, dass er drei unterschiedliche Positionen einnehmen kann, und dass das Verfahren ferner einen Schritt des Annullierens der Ansteuerung des motorisierten Rollladens umfasst, der von der Position des motorisierten Rollladens während der vorhergehenden Iteration und von dem Modus, in dem sich eine Heizungsansteuerungsvorrichtung des mindestens einen Raumes befindet, abhängt.

4. Verfahren nach Anspruch 3, **dadurch gekennzeichnet, dass**, wenn der Modus, in dem sich die Heizungsansteuerungsvorrichtung des mindestens einen Raumes befindet, der Modus zur Unterdrückung der Heizungssteuerung ist, die Ansteuerung des motorisierten Rollladens für einen gegebenen Zeitraum annulliert wird, wenn sich der motorisierte Rollladen bei der vorhergehenden Iteration in einer Position befindet, die einer kleineren Sonneneinstrahlungsmenge das Passieren der Öffnung gestattet als derjenigen, die durch die Position des motorisierten Rollladens, deren Ansteuerung annulliert wird, gestattet wird.

5. Verfahren nach Anspruch 3 oder 4, **dadurch gekennzeichnet, dass**, wenn der Modus, in dem sich die Heizungsansteuerungsvorrichtung des mindestens einen Raumes befindet, der Modus zur Heizungssteuerung ist, die Ansteuerung des motorisierten Rollladens für einen gegebenen Zeitraum annulliert wird, wenn sich der motorisierte Rollladen bei der vorhergehenden Iteration in einer Position befindet, die einer größeren Sonneneinstrahlungsmenge das Passieren der Öffnung gestattet als derjenigen, die durch die Position des motorisierten Rollladens, deren Ansteuerung annulliert wird, gestattet wird.

6. Verfahren nach einem beliebigen der Ansprüche 1 bis 5, **dadurch gekennzeichnet, dass**, wenn der Modus, in dem sich die Heizungsansteuerungsvorrichtung des mindestens einen Raumes befindet, der Modus zur Heizungssteuerung ist, das Verfahren ferner einen Schritt des Berücksichtigens der Solltemperatur des mindestens einen Raumes und des Modifizierens mindestens einer Temperaturschwelle umfasst.

7. Verfahren nach einem beliebigen der Ansprüche 1 bis 6, **dadurch gekennzeichnet, dass** das Verfahren ferner einen Schritt des Zählens der täglichen Anzahl von Öffnungs- und Schließvorgängen des motorisierten Rollladens mindestens einer Öffnung eines Raumes des Gebäudes und des Begrenzens der täglichen Anzahl von Öffnungs- und Schließvorgängen des motorisierten Rollladens umfasst.

8. Vorrichtung zur Ansteuerung (100) mindestens eines motorisierten Rollladens (103) mindestens einer Öffnung (103) eines Raumes (10) eines Gebäudes, wobei die Ansteuerungsvorrichtung Folgendes umfasst:
- Mittel zum Feststellen eines Modus, in dem sich eine Heizungsansteuerungsvorrichtung (105) des mindestens einen Raumes befindet,
- Mittel zum Feststellen des Werts der Temperatur (106) in dem mindestens einen Raum,
- Mittel zum Feststellen des Werts der Sonneneinstrahlung,
Mittel zum Feststellen eines Werts mindestens eines Parameters anhand des Modus, in dem sich die Heizungsansteuerungsvorrichtung (105) des mindestens einen Raumes befindet,
- Mittel zum Treffen einer Entscheidung über eine Ansteuerung des motorisierten Rollladens (101) anhand des festgestellten Werts des mindestens einen Parameters,
- Mittel zum Ansteuern des motorisierten Rollladens gemäß der Entscheidung,
**dadurch gekennzeichnet, dass** das Mittel zum Treffen einer Entscheidung so konfiguriert ist, dass die Entscheidung über die Ansteuerung des motorisierten Rollladens dadurch erfolgt, dass der Wert der Sonneneinstrahlung mit mindestens einem Parameterwert, der anhand des Modus, in dem sich die Heizungsansteuerungsvorrichtung des mindestens einen Raumes befindet, festgestellt wird, verglichen wird, wobei der mindestens eine Parameterwert, der anhand des Modus, in dem sich die Heizungsansteuerungsvorrichtung des mindestens einen Raumes befindet, festgestellt wird, ferner von der festgestellten Temperatur des mindestens einen Raumes und von der Uhrzeit (107), zu der die Temperatur des Raumes des Gebäudes und die Sonneneinstrahlung festgestellt werden, abhängt, wobei der mindestens eine Parameterwert, der anhand des Modus, in dem sich die Heizungsansteuerungsvorrichtung befindet, festgestellt wird, anhand von zwei Geraden festgestellt wird, wobei auf der Abszissenachse die Zeit dargestellt ist und auf der Ordinatenachse die durch den Sensor gemessene Sonneneinstrahlung dargestellt ist, wobei jede der Geraden eine Steigung und eine Ordinate im Ursprung aufweist, wobei die Steigung und die Ordinate im Ursprung von dem Modus, in dem sich die Heizungsansteuerungsvorrichtung befindet, und von einer Kritikalitätsstufe, die für die Abweichung zwischen der Temperatur und einer ersten und einer zweiten Schwelle repräsentativ ist, abhängen, wobei die Kritikalitätsstufe eins, zwei oder drei betragen kann, wobei die Steigungen gleich 0 sind, wenn der Wert der Kritikalitätsstufe im Modus zur Unterdrückung der Heizungssteuerung gleich 1 oder 3 ist, wobei die Steigungen im Modus zur Heizungssteuerung gleich 0 sind, wobei die Steigungen gleich 10 sind, wenn der Wert der Kritikalitätsstufe im Modus zur Unterdrückung der Heizungssteuerung gleich 2 ist, wobei die Ordinate der ersten affinen Geraden gleich 2000 ist, wenn die Kritikalitätsstufe im Modus zur Unterdrückung der Heizungssteuerung gleich 1 ist, wobei die Ordinate der zweiten affinen Geraden gleich 2000 ist, wenn die Kritikalitätsstufe im Modus zur Unterdrückung der Heizungssteuerung gleich 1 ist, wobei die Ordinate der ersten affinen Geraden gleich 200 ist, wenn die Kritikalitätsstufe im Modus zur Unterdrückung der Heizungssteuerung gleich 2 ist, wobei die Ordinate der zweiten affinen Geraden gleich 400 ist, wenn die Kritikalitätsstufe im Modus zur Unterdrückung der Heizungssteuerung gleich 2 ist, wobei die Ordinate der ersten affinen Geraden gleich 150 ist, wenn die Kritikalitätsstufe im Modus zur Unterdrückung der Heizungssteuerung gleich 3 ist, wobei die Ordinate der zweiten affinen Geraden gleich 150 ist, wenn die Kritikalitätsstufe im Modus zur Unterdrückung der Heizungssteuerung gleich 3 ist, wobei die Ordinate der ersten affinen Geraden gleich 2000 ist, wenn die Kritikalitätsstufe im Modus zur Heizungssteuerung gleich 1 ist, wobei die Ordinate der zweiten affinen Geraden gleich 2000 ist, wenn die Kritikalitätsstufe im Modus zur Heizungssteuerung gleich 1 ist, wobei die Ordinate der ersten affinen Geraden gleich 500 ist, wenn die Kritikalitätsstufe im Modus zur Heizungssteuerung gleich 2 ist, wobei die Ordinate der zweiten affinen Geraden gleich 700 ist, wenn die Kritikalitätsstufe im Modus zur Heizungssteuerung gleich 2 ist, wobei die Ordinate der ersten affinen Geraden gleich 400 ist, wenn die Kritikalitätsstufe im Modus zur Heizungssteuerung gleich 3 ist, wobei die Ordinate der zweiten affinen Geraden gleich 400 ist, wenn die Kritikalitätsstufe im Modus zur Heizungssteuerung gleich 3 ist.

## Claims

1. Method for controlling at least one motorised rolling blind (101) of at least one opening of a room (10) of a building, the method comprises the steps of:
- obtaining a current mode of a heating control device (105) of the at least one room, the current mode of the heating control device (105) of the at least one room (10) is a heating control mode or a heating control inhibition mode,
- obtaining the value of the temperature (106) in the at least one room,
- obtaining the value of the solar radiation,
- obtaining a value of at least one parameter from the current mode of the heating control device of the at least one room,
- deciding on a control of the motorised rolling blind (101) from the value of the at least one parameter obtained,
- controlling the motorised rolling blind according to the decision,
**characterized in that** the deciding of the control of the motorised rolling blind is performed by comparing the value of the solar radiation to at least one parameter value obtained from the current mode of the heating control device of the at least one room, the at least one parameter value obtained from the current mode of the heating control device of the at least one room is further dependent on the temperature of the at least one room obtained and the time (107) at which the temperature of the room of the building and the solar radiation are obtained, the at least one parameter value obtained from the current mode of the heating control device is obtained from two straight lines, each of the straight lines having a directing coefficient and an ordinate at the origin, on the abscissa axis the time is represented, on the ordinate axis the solar radiation measured by the sensor is represented, the directing coefficient and the ordinate at the origin being a function of the current mode of the heating control device and of a level of criticality representative of the deviation between the temperature and a first and second threshold, the level of criticality being able to be equal to one, two or three, the directing coefficients being equal to 0 if the value of the level of criticality is equal to 1 or 3 in heating control inhibition mode, the directing coefficients being equal to 0 in heating control mode, the directing coefficients being equal to 10 if the value of the level of criticality is equal to 2 in heating control inhibition mode, the ordinate of the first affine straight line is equal to 2000 if the level of criticality is equal to 1 in heating control inhibition mode, the ordinate of the second affine straight line is equal to 2000 if the level of criticality is equal to 1 in heating control inhibition mode, the ordinate of the first affine straight line is equal to 200 if the level of criticality is equal to 2 in heating control inhibition mode, the ordinate of the second affine straight line is equal to 400 if the level of criticality is equal to 2 in heating control inhibition mode, the ordinate of the first affine straight line is equal to 150 if the level of criticality is equal to 3 in heating control inhibition mode, the ordinate of the second affine straight line is equal to 150 if the level of criticality is equal to 3 in heating control inhibition mode, the ordinate of the first affine straight line is equal to 2000 if the level of criticality is equal to 1 in heating control mode, the ordinate of the second affine straight line is equal to 2000 if the level of criticality is equal to 1 in heating control mode, the ordinate of the first affine straight line is equal to 500 if the level of criticality is equal to 2 in heating control mode, the ordinate of the second affine is equal to 700 if the level of criticality is equal to 2 in heating control mode, the ordinate of the first affine straight line is equal to 400 if the level of criticality is equal to 3 in heating control mode, the ordinate of the second affine straight line is equal to 400 if the level of criticality is equal to 3 in heating control mode.

2. Method according to Claim 1, **characterized in that** the method further comprises the steps, executed when the heating control device is in the heating control inhibition mode, of:
- obtaining the outside temperature (108) of the building at a predetermined time of the day,
- comparing the outside temperature of the building obtained with an outside temperature comparison threshold,
and **in that** the motorised rolling blind is controlled to take three positions, of which two positions are dependent on the comparison of the outside temperature of the building obtained with the outside temperature comparison threshold.

3. Method according to either one of Claims 1 and 2, **characterized in that** the method is executed iteratively, the motorised rolling blind being controlled to take three different positions and **in that** the method further comprises a step of cancellation of the motorised rolling blind control which is dependent on the position of the motorised rolling blind in the preceding iteration and on the current mode of a heating control device of the at least one room.

4. Method according to Claim 3, **characterized in that**, if the current mode of the heating control device of the at least one room is the heating control inhibition mode, the control of the motorised rolling blind is cancelled for a given period if the motorised rolling blind is, on the preceding iteration, in a position that allows a lesser quantity of solar radiation to pass through the opening than that permitted by the position of the motorised rolling blind for which the control is cancelled.

5. Method according to Claim 3 or 4, **characterized in that**, if the current mode of the heating control device of the at least one room is the heating control mode, the control of the motorised rolling blind is cancelled for a given period if the motorised rolling blind is, on the preceding iteration, in a position that allows a greater quantity of solar radiation to pass through the opening than that permitted by the position of the motorised rolling blind for which the control is cancelled.

6. Method according to any one of Claims 1 to 5, **characterized in that** if the current mode of the heating control device of the at least one room is the heating control mode, the method further comprises a step of taking into account the setpoint temperature of the at least one room and of modifying at least one temperature threshold.

7. Method according to any one of Claims 1 to 6, **characterized in that** the method further comprises a step of counting the number of daily openings or closings of the motorised rolling blind of at least one opening of a room of the building and of limiting the number of daily openings or closings of the motorised rolling blind.

8. Control device (100) of at least one motorised rolling blind (103) of at least one opening (103) of a room (10) of a building, the control device comprises:
- means for obtaining a current mode of a heating control device (105) of the at least one room,
- means for obtaining the value of the temperature (106) in the at least one room,
- means for obtaining the value of the solar radiation,
means for obtaining a value of at least one parameter from the current mode of the heating control device (105) of the at least one room,
- means for deciding on a control of the motorised rolling blind (101) from the value of the at least one parameter obtained,
- means for controlling the motorised rolling blind according to the decision,
**characterized in that** the decision means is configured such that the deciding on the control of the motorised rolling blind is performed by comparing the value of the solar radiation to at least one parameter value obtained from the current mode of the heating control device of the at least one room, the at least one parameter value obtained from the current mode of the heating control device of the at least one room is further dependent on the temperature of the at least one room obtained and the time (107) at which the temperature of the room of the building and the solar radiation are obtained, the at least one parameter value obtained from the current mode of the heating control device is obtained from two straight lines, on the abscissa axis the time is represented, on the ordinate axis the solar radiation measured by the sensor is represented, each of the straight lines having a directing coefficient and an ordinate at the origin, the directing coefficient and the ordinate at the origin being a function of the current mode of the heating control device and of a level of criticality representative of the deviation between the temperature and a first and second threshold, the level of criticality being able to be equal to one, two or three, the directing coefficients being equal to 0 if the value of the level of criticality is equal to 1 or 3 in heating control inhibition mode, the directing coefficients being equal to 0 in heating control mode, the directing coefficients being equal to 10 if the value of the level of criticality is equal to 2 in heating control inhibition mode, the ordinate of the first affine straight line is equal to 2000 if the level of criticality is equal to 1 in heating control inhibition mode, the ordinate of the second affine straight line is equal to 2000 if the level of criticality is equal to 1 in heating control inhibition mode, the ordinate of the first affine straight line is equal to 200 if the level of criticality is equal to 2 in heating control inhibition mode, the ordinate of the second affine straight line is equal to 400 if the level of criticality is equal to 2 in heating control inhibition mode, the ordinate of the first affine straight line is equal to 150 if the level of criticality is equal to 3 in heating control inhibition mode, the ordinate of the second affine straight line is equal to 150 if the level of criticality is equal to 3 in heating control inhibition mode, the ordinate of the first affine straight line is equal to 2000 if the level of criticality is equal to 1 in heating control mode, the ordinate of the second affine straight line is equal to 2000 if the level of criticality is equal to 1 in heating control mode, the ordinate of the first affine straight line is equal to 500 if the level of criticality is equal to 2 in heating control mode, the ordinate of the second affine straight line is equal to 700 if the level of criticality is equal to 2 in heating control mode, the ordinate of the first affine straight line is equal to 400 if the level of criticality is equal to 3 in heating control mode, the ordinate of the second affine straight line is equal to 400 if the level of criticality is equal to 3 in heating control mode.
